# EUROPÄISCHE PATENTSCHRIFT

(11) **EP 2 313 642 B1**
(45) Veröffentlichungstag und Bekanntmachung des Hinweises auf die Patenterteilung: **19.09.2012**
(21) Anmeldenummer: 09777420.2
(22) Anmeldetag: 24.07.2009
(51) Int. Cl.: F02N 11/08, B60R 25/04

(54) **FERNSTARTSYSTEM FÜR EIN FAHRZEUG UND VERFAHREN ZUM ABSICHERN EINER FERNSTARTFUNKTION**
REMOTE IGNITION SYSTEM FOR A VEHICLE AND METHOD FOR SECURING A REMOTE IGNITION FUNCTION
SYSTÈME DE DÉMARRAGE À DISTANCE POUR UN VÉHICULE ET PROCÉDÉ DE SÉCURISATION D'UNE FONCTION DE DÉMARRAGE À DISTANCE

(30) Priorität: 22.08.2008 DE 102008039303
(43) Veröffentlichungstag der Anmeldung: 27.04.2011
(73) Patentinhaber: Audi AG, 85045 Ingolstadt (DE)
(72) Erfinder: LEDENDECKER, Ingo, 85114 Buxheim (DE)
(86) Internationale Anmeldenummer: PCT/EP2009/005382
(87) Internationale Veröffentlichungsnummer: WO 2010/020330

(56) Entgegenhaltungen:
- EP-A1- 1 400 421
- DE-A1- 10 163 227
- GB-A- 2 289 723
- US-A- 4 227 588
- US-A- 5 942 988

## Beschreibung

Die vorliegende Erfindung betrifft ein Fernstartsystem für ein Fahrzeug mit einem Fernstartsteuergerät zum Aktivieren eines Fernstarts durch Bereitstellen eines Freigabesignals, Mitteln zum Erfassen eines Losfahrwunsches eines Fahrers und einem Motorsteuergerät mit einer ersten Auswerteeinheit zum Auswerten eines von dem Fernstartsteuergerät empfangenen Signals, eine mit der ersten Auswerteeinheit gekoppelten Einheit zum Starten eines Motors im Ansprechen auf ein Freigabesignal und zum Anhalten des Motors im Ansprechen auf ein Sperrsignal und einer zweiten Auswerteeinheit zum Auswerten von von den Mitteln zum Erfassen eines Losfahrwunsches empfangenen Signalen. Die Erfindung betrifft außerdem ein Verfahren zum Absichern einer Fernstartfunktion.

Um den Komfort für Autofahrer zu erhöhen, wurden Systeme entwickelt, mittels derer man ein Fahrzeug vor dem Losfahren über die Klimaanlage abkühlen beziehungsweise aufheizen lassen kann, indem man per Fernbedienung den Motor startet. Der Fahrer befindet sich hierbei nicht im Fahrzeug, welches verriegelt bleibt. Damit kein Missbräuch betrieben werden kann, wird aus Sicherheitsgründen der Motor ausgeschaltet, wenn eine Fahrzeugtür geöffnet wird. Als Signal wird hierbei üblicherweise der Türkontakt der Fahrertüre verwendet. Ein solches System ist beispielsweise aus der US 4,227,588 oder der US 5,342,988 bekannt.

Fällt jedoch der Türkontakt aus, so bleibt der Motor an, und unberechtigte Personen könnten einfach losfahren. Es ist auch denkbar, das entsprechende Signal zu manipulieren, um so in sehr einfacher Weise die Wegfahrsperre des Fahrzeuges zu überwinden.

Es ist daher die Aufgabe der vorliegenden Erfindung, ein Fernstartsystem und ein Verfahren zum Absichern einer Fernstartfunktion anzugeben, die eine erhöhte Sicherheit garantieren.

Diese Aufgabe wird gelöst durch ein Fernstartsystem gemäß Patentanspruch 1 und durch ein Verfahren zum Absichern einer Fernstartfunktion gemäß Patentanspruch 11.

Die vorliegende Erfindung beruht auf der Erkenntnis, dass, wenn ein Kraftfahrzeug in Bewegung gesetzt werden soll, bei diesem Vorgang Signale beteiligt sind, die für das Betreiben des Motors notwendig und daher nicht manipulierbar sind. Würden solche Signale nämlich manipuliert werden oder ganz ausfallen, kann der Motor nicht laufen. Werden solche Signale, die dem Motorsteuergerät einen Losfahrwunsch übermitteln, als Auslöser dafür verwendet, dass nach einem Femstart der Motor direkt ausgeht, so kann die Sicherheit bei einem Femstart erhöht werden. Zu diesem Zweck umfasst das Motorsteuergerät eines Fahrzeugs ferner eine Speichereinheit zum Speichern des letzten von der ersten Auswerteeinheit ausgewerteten Signals und eine mit der zweiten Auswerteeinheit, mit der Speichereinheit und mit der Einheit zum Starten und Anhalten des Motors gekoppelte Prüfeinheit, die dazu ausgebildet ist, bei Feststellen eines Losfahrwunsches durch die zweite Auswerteeinheit das in der Speichereinheit gespeicherte Signal auszulesen und, falls es sich um ein Freigabesignal handelt, ein Sperrsignal an die Einheit zum Starten und Anhalten des Motors zu senden sowie den Inhalt der Speichereinheit zu modifizieren.

Gemäß einer bevorzugten Ausgestaltung der Erfindung umfassen die Mittel zum Erfassen eines Losfahrwunsches einen Pedalwertgeber eines elektronischen Gaspedals. Sobald eine Veränderung des Pedalwertgebers festgestellt wird, geht der Motor aus, falls er mittels eines Femstarts gestartet wurde. Der Eingang des Pedalwertgebers vom elektronischen Gaspedal stellt ein sicheres Signal dar, da dieser nicht manipulierbar ist. Bei Ausfall oder Manipulation des Pedalwertgeber-Signals kann das Fahrzeug nämlich nicht gefahren werden, da man kein Gas geben kann. Das auswertende Steuergeräts des Pedalwertgebers ist direkt das Motorsteuergerät selbst. Dies bedeutet einen hohen Schutz vor Missbrauch.

Gemäß einer weiteren bevorzugten Ausgestaltung der Erfindung umfassen die Mittel zum Erfassen eines Losfahrwunsches einen Sensor zum Erfassen einer Motordrehzahl, der ebenfalls den Vorteil hat, dass er nicht manipulierbar ist. Bei dem Sensor kann es sich um einen Drehzahlsensor oder um einen Oberer-Totpunkt-Geber (OT-Geber) handeln.

Gemäß einer weiteren bevorzugten Ausgestaltung der Erfindung sind die Mittel zum Erfassen eines Losfahrwunsches dazu ausgebildet, eine Drehmomentanforderung bzw. Drehmomentänderung an den Motor festzustellen. In diesem Fall können die Mittel zum Erfassen eines Losfahrwunsches direkt im Motorsteuergerät angesiedelt und dazu ausgebildet sein, eine plötzliche Momentenerhöhung zu erkennen, die durch ein Anfahren ohne Gas zu geben zwangsläufig ausgelöst wird.

Gemäß einer bevorzugten Ausführungsform der Erfindung umfasst das Fernstartsystem ferner Mittel zum Erfassen des Eintretens mindestens einer der folgenden Bedingungen: a) Entriegeln des Fahrzeugs, b) Öffnen mindestens einer Fahrzeugtüre und c) Anwesenheit einer Person im Fahrzeug. Vorzugsweise umfassen die Mittel zum Erfassen des Eintretens mindestens einer dieser Bedingungen mindestens eines aus der folgenden Gruppe: Einen Kontaktschalter eines Türschließzylinders einer Türe des Fahrzeugs, eine Zentralverriegelung des Fahrzeugs, einen Türkontaktschalter einer Türe des Fahrzeugs, insbesondere der Fahrertüre, einen Türgriffsensor, eine Sitzbelegungserkennung und einen Innenraumsensor einer Diebstahlwamanlage. Ein Entriegeln des Fahrzeugs kann mittels des Kontaktschalters eines Türschließzylinders einer Fahrzeugtüre oder, falls vorhanden, der Zentralverriegelung des Fahrzeugs festgestellt werden. Ein Öffnen mindestens einer Fahrzeugtüre kann durch den Türkontaktschalter einer Fahrzeugtüre oder den Türgriffsensor festgestellt werden, während eine Anwesenheit einer Person im Fahrzeug durch eine Sitzbelegungserkennung oder einen Innenraumsensor einer Diebstahlwamanlage erfasst werden kann. Werden solche Mittel verwendet, um nach einem Femstart das Ausschalten des Motors zu veranlassen, so kommen die Mittel zum Erfassen eines Losfahrwunsches nur bei Ausfall der Mittel zum Erfassen des Eintretens der Bedingungen a) bis c) zum Tragen.

Gemäß einer besonders bevorzugten Ausführungsform der Erfindung ist die Prüfeinheit des Motorsteuergeräts mit den Mitteln zum Erfassen des Eintretens mindestens einer der Bedingungen a) bis c) gekoppelt und dazu ausgebildet, bei Feststellen des Eintretens mindestens einer der Bedingungen a) bis c) ebenfalls das in der Speichereinheit gespeicherte Signal auszulesen und, falls es sich um ein Freigabesignal handelt, ein Sperrsignal an die Einheit zum Starten und Anhalten des Motors zu senden, sowie den Inhalt der Speichereinheit zu modifizieren. In diesem Fall melden die Mittel zum Erfassen des Eintretens mindestens einer der Bedingungen a) bis c) selbsttätig das Eintreten der entsprechenden Bedingung an das Motorsteuergerät.

Gemäß einer alternativen besonders bevorzugten Ausführungsform der Erfindung ist das Femstartsteuergerät mit den Mitteln zum Erfassen des Eintretens mindestens einer der Bedingungen a) bis c) gekoppelt und dazu ausgebildet, bei Feststellen des Eintretens mindestens einer der Bedingungen a), b) oder c) ein Sperrsignal bereitzustellen, wenn ein Femstart vorliegt. In diesem Fall wertet das Femstartsteuergerät von den Mitteln zum Erfassen des Eintretens mindestens einer der Bedingungen a) bis c) bereitgestellte Signale aus und veranlasst bei Vorliegen eines Femstarts durch Bereitstellen eines Sperrsignals ein Anhalten des Motors durch das Motorsteuergerät.

Vorzugsweise ist das Femstartsteuergerät dazu ausgebildet, einen Femstart im Ansprechen auf ein Signal von einer Fernbedienung zu aktivieren. Zusätzlich oder alternativ ist das Femstartsteuergerät dazu ausgebildet, einen Fernstart zu einer voreingestellten Zeit zu aktivieren. So kann ein Fahrzeugnutzer durch Einstellen eines Timers im Voraus festlegen, wann der Motor gestartet werden soll.

Gemäß einer bevorzugten Ausgestaltung der Erfindung sind das Femstartsteuergerät und das Motorsteuergerät über einen CAN-Bus verbunden.

Die im Zusammenhang mit dem erfindungsgemäßen System vorgestellten Vorteile und bevorzugten Ausführungsformen gelten in entsprechender Weise für die erfindungsgemäße Vorrichtung.

Die Erfindung wird im Folgenden anhand der beiliegenden Zeichnung, die ein bevorzugtes Ausführungsbeispiel darstellt, beschrieben. Es zeigt:

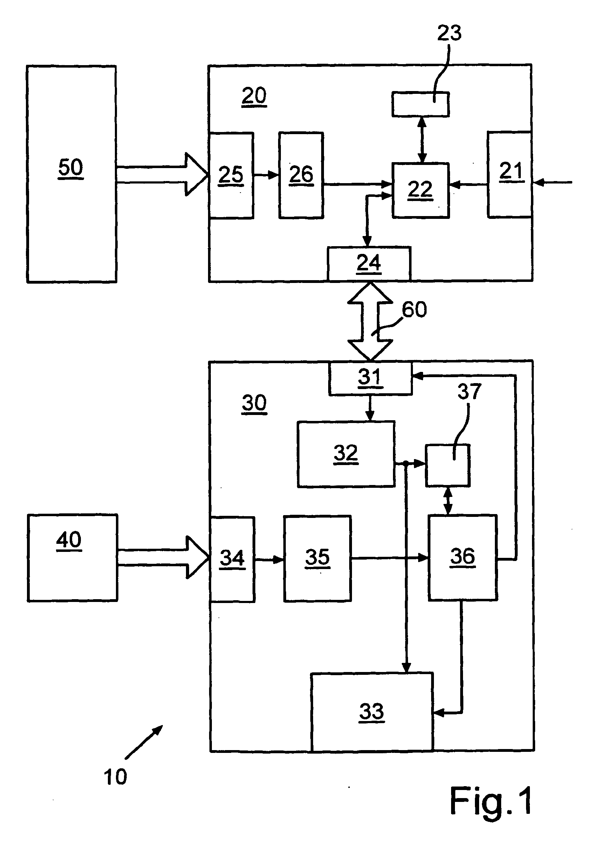

- Fig. 1: eine schematische Darstellung einer Ausführungsform des erfindungsgemäßen Systems.

Fig. 1 zeigt ein Fernstartsystem 10 für ein Fahrzeug mit einem Femstartsteuergerät 20 zum Aktivieren eines Fernstarts, einem Motorsteuergerät 30, Mitteln 40 zum Erfassen eines Losfahrwunsches eines Fahrers und Mitteln 50 zum Erfassen des Eintretens mindestens einer der folgenden Bedingungen: Entriegeln des Fahrzeugs, Öffnen mindestens einer Fahrzeugtüre und Anwesenheit einer Person im Fahrzeug. Das Femstartsteuergerät 20 und das Motorsteuergerät 10 sind über einen CAN-Bus verbunden.

Gemäß dem bevorzugten Ausführungsbeispiel umfasst das Femstartsteuergerät 20 einen Empfänger 21 zum Empfangen eines Signals zum Aktivieren eines Fernstarts. Dieses Signal wird von einem Benutzer beispielsweise mittels einer Fernbedienung zum Fahrzeug gesendet, um das Fahrzeug von Ferne zu starten und je nach Witterung ein Abkühlen oder Aufheizen des Fahrzeugs zu ermöglichen, bevor der Benutzer des Fahrzeugs in dieses einsteigt. Zusätzlich oder alternativ kann auch vorgesehen sein, dass durch den Benutzer eine Uhrzeit im Voraus einstellbar ist, zu der das Fernstartsteuergerät 20 dann einen Femstart aktiviert. Das Femstartsteuergerät 20 umfasst ferner einen Eingang 25 zum Empfangen eines Signals von den Mitteln 50 zum Erfassen des Eintretens einer bestimmten Bedingung und eine mit dem Eingang 25 verbundene Auswerteeinheit 26 zum Auswerten eines von den Mitteln 50 zum Erfassen des Eintretens einer bestimmten Bedingung empfangenen Signals. Bei den Mitteln zum Erfassen des Eintretens einer bestimmten Bedingung kann es sich um einen Kontaktschalter eines Türschließzylinders einer oder mehrerer Türen des Fahrzeugs, um einen Türkontaktschalter einer oder mehrerer Türen des Fahrzeugs, vorzugsweise der Fahrertüre, um einen Türgriffsensor, der entweder ein Ziehen am Türgriff oder das Greifen einer Hand nach dem Türgriff erfasst, oder um eine Sitzbelegungserkennung handeln. Es kann auch eine Kombination mehrerer dieser Mittel vorgesehen sein. Zusätzlich oder alternativ können die Mittel 50 auch eine Zentralverriegelung umfassen. In diesem Fall werden nicht nur Signale von der Zentralverriegelung empfangen, sondern es können auch Signale von dem Femstartsteuergerät 20 über die Schnittstelle 25 zur Zentralverriegelung gesendet werden. Das Femstartsteuergerät 20 umfasst ferner einen Ein-/Ausgang 24 zum Empfangen von Signalen von und zum Senden von Signalen an das Motorsteuergerät 30. Alternativ zu dem in Fig. 1 dargestellten Ausführungsbeispiel kann das Femstartsteuergerät 20 auch nur einen Ein-/Ausgang umfassen, der als Schnittstelle zwischen dem Femstartsteuergerät 20 und sowohl dem Motorsteuergerät 30 als auch den Mitteln 50 zum Erfassen des Eintretens einer bestimmten Bedingung dient. Außerdem umfasst das Femstartsteuergerät 20 eine mit dem Empfänger 21, dem Ein-/Ausgang 24 und der Auswerteeinheit 26 gekoppelte Zentraleinheit 22 zum Aktivieren eines Femstarts durch Übermitteln eines Freigabesignals an den Ein-/Ausgang 24 im Ansprechen auf ein von dem Empfänger 21 erhaltenes Aktivierungssignal. Schließlich umfasst das Femstartsteuergerät 20 noch eine mit der Zentraleinheit 22 gekoppelte Speichereinheit 23 zum Speichern eines Signals, das das Vorliegen eines Femstarts bezeichnet. Es ist auch denkbar, dass die Komponenten des Femstartsteuergeräts in einem anderen Steuergerät enthalten sind.

Das Motorsteuergerät 30 umfasst gemäß dem bevorzugten Ausführungsbeispiel einen Ein-/Ausgang 31 zum Empfangen von Signalen von und Senden von Signalen an das Femstartsteuergerät 20 und eine mit dem Ein-/Ausgang 31 gekoppelte erste Auswerteeinheit 32 zum Auswerten von von dem Fernstartsteuergerät 20 empfangenen Signalen. Das Motorsteuergerät 30 umfasst ferner eine mit der ersten Auswerteeinheit 32 gekoppelte Einheit 33 zum Starten eines Motors im Ansprechen auf ein Freigabesignal und zum Anhalten des Motors im Ansprechen auf ein Sperrsignal. Des Weiteren umfasst das Motorsteuergerät 30 einen Eingang 34 zum Empfangen eines Signals von den Mitteln 40 zum Erfassen eines Losfahrwunsches eines Fahrers und eine mit dem Eingang 34 gekoppelte zweite Auswerteeinheit 35 zum Auswerten von von den Mitteln 40 zum Erfassen eines Losfahrwunsches empfangenen Signalen. Alternativ zu dem in Fig. 1 dargestellten Ausführungsbeispiel kann das Motorsteuergerät 30 auch nur einen Ein-/Ausgang umfassen, der als Schnittstelle zwischen dem Motorsteuergerät 30 und sowohl dem Femstartsteuergerät 20 als auch den Mitteln 40 zum Erfassen eines Losfahrwunsches eines Fahrers dient. Im Motorsteuergerät 30 ist ferner eine mit der zweiten Auswerteeinheit 35, mit der Einheit 33 zum Starten und Anhalten des Motors und mit dem Ein-/Ausgang 31 gekoppelte Prüfeinheit 36 vorgesehen, um bei Feststellen eines Losfahrwunsches durch die zweite Auswerteeinheit 35 und Vorliegen eines Femstarts das Anhalten des Motors durch Senden eines Sperrsignals an die Einheit 33 zum Starten und Anhalten des Motors zu veranlassen und ein Signal am Ein-/Ausgang 31 bereitzustellen, das signalisiert, dass der Motor abgestellt wurde. Um festzustellen, ob ein Femstart vorliegt, umfasst das Motorsteuergerät 30 schließlich noch eine mit der Auswerteeinheit 32 und der Prüfeinheit 36 gekoppelte Speichereinheit 37 zum Speichern des letzten von der ersten Auswerteeinheit 32 ausgewerteten Signals. Ist dieses ein Freigabesignal, so liegt ein Femstart vor.

Bei den Mitteln 40 zum Erfassen eines Losfahrwunsches eines Fahrers handelt es sich vorzugsweise um einen Pedalwertgeber eines elektronischen Gaspedals, der ohnehin direkt mit dem Motorsteuergerät als dessen auswertendem Steuergerät verbunden ist. Per Ausfall oder Manipulation des Pedalwertgeber-Signals kann das Fahrzeug nicht gefahren werden, da man kein Gas geben kann. Dies gewährleistet eine hohe Sicherheit des Fernstartsystems 10. Alternativ zum Pedalwertgeber kann auch ein Drehzahlsensor zum Erfassen einer Motordrehzahl verwendet werden, um einen Losfahrwunsch zu signalisieren, der ebenfalls den Vorteil bietet, nicht manipulierbar zu sein. Als dritte Alternative zum Signalisieren eines Losfahrwunsches könnte noch eine zusätzliche Software, vorzugsweise direkt im Motorsteuergerät 30, vorgesehen sein, die eine plötzliche Momentenerhöhung erkennt, die durch ein Anfahren ohne Gas zu geben zwangsläufig ausgelöst wird.

Im Folgenden soll die Funktionsweise des bevorzugten Ausführungsbeispiels des erfindungsgemäßen Femstartsystems 10 erläutert werden. Bei Empfang eines Aktivierungssignals durch den Empfänger 21 oder bei Erreichen einer von einem Benutzer voreingestellten Zeit überprüft das Femstartsteuergerät 20 zuerst, ob die Voraussetzungen vorliegen, unter denen ein Femstart durchzuführen ist. Zu diesen Voraussetzungen kann gehören, dass die Türen des Fahrzeugs verriegelt sind. Dazu werden beispielsweise Signale von Kontaktschaltern von den Türschließzylindern der Fahrzeugtüren ausgewertet. Alternativ kann ein Signal von der Zentralverriegelung des Fahrzeugs ausgewertet werden. In diesem Fall kann auch vorgesehen sein, dass, wenn festgestellt wird, dass das Fahrzeug nicht verriegelt ist, das Fernstartsteuergerät 20 für einen Femstart ein Signal zum Verriegeln des Fahrzeugs an die Zentralverriegelung sendet. Es kann auch zusätzlich vorgesehen sein, dass vor einem Femstart geprüft wird, ob ein Gang eingelegt ist. Dann wird ein Femstart nur durchgeführt, wenn dies nicht der Fall ist. Sind die festgelegten Voraussetzungen für einen Femstart vorhanden, so wird das Vorliegen eines Femstarts in der Speichereinheit 23 gespeichert und ein Freigabesignal am Ein-/Ausgang bereitgestellt. Empfängt das Motorsteuergerät 30 an seinem Ein-/Ausgang 31 ein Signal von dem Femstartsteuergerät 20, so wird dieses in der ersten Auswerteeinheit 32 ausgewertet und in der Speichereinheit 37 gespeichert sowie an die Einheit 33 zum Starten und Anhalten eines Motors übermittelt. Handelt es sich um ein Freigabesignal, so startet die Einheit 33 den Motor.

Um zu verhindern, dass unberechtigte Nutzer mit dem Fahrzeug davonfahren, soll der Motor bei Einsteigen einer Person in das Fahrzeug wieder ausgeschaltet werden. Dazu wird einerseits durch die Mittel 50 überprüft, ob das Fahrzeug entriegelt wird, mindestens eine Fahrzeugtüre geöffnet wird oder, beispielsweise mittels einer Sitzbelegungserkennung, eine Person im Fahrzeug anwesend ist. Sobald von den Mitteln 50 zum Erfassen des Eintretens mindestens einer dieser Bedingungen ein entsprechendes Signal durch das Femstartsteuergerät 20 empfangen und ausgewertet wird, wird durch Auslesen der Speichereinheit 23 überprüft, ob ein Femstart vorliegt, und, wenn dies der Fall ist, ein Sperrsignal am Ein-/Ausgang 24 bereitgestellt. Dieses wird von dem Motorsteuergerät 30 empfangen und ausgewertet. Erkennt das Motorsteuergerät 30, dass es sich um ein Sperrsignal handelt, stellt es den Motor ab.

Zusätzlich wird erfindungsgemäß bei Empfang eines Losfahrwunschsignals am Eingang 34 des Motorsteuergeräts 30 durch Auslesen der Speichereinheit 37 überprüft, ob ein Femstart vorliegt, und, wenn dies so ist, durch die Prüfeinheit 36 ein Sperrsignal an die Einheit 33 zum Starten und Anhalten eines Motors gesendet. In diesem Fall stellt die Prüfeinheit 36 außerdem ein Signal bereit, um dem Femstartsteuergerät 20 oder anderen Steuergeräten im Fahrzeug das Abstellen des Motors zu melden. Das Sperrsignal vom Femstartsteuergerät 20 und das Sperrsignal von der Prüfeinheit 36 führen als ODER-Bedingung zum unmittelbaren Anhalten des Motors. So ist sichergestellt, dass, falls die Mittel 50 zum Erfassen des Eintretens einer bestimmten Bedingung versagen oder die von diesen Mitteln gesendeten Signale manipuliert werden, der Motor nach einem Femstart trotzdem abgestellt wird, sobald jemand versucht loszufahren. Vorzugsweise dient hierbei das Signal eines Pedalwertgebers 40, das direkt vom Motorsteuergerät 30 eingelesen wird, zur Feststellung eines Losfahrwunsches, wobei eine Veränderung des Pedalwertgebers signalisiert, dass Gas gegeben wird.

Alternativ zu dem vorstehend geschilderten Ausführungsbeispiel, bei dem das Femstartsteuergerät 20 bei Eintreten mindestens einer der Bedingungen a) bis c) ein Sperrsignal an das Motorsteuergerät 30 sendet, kann auch vorgesehen sein, dass die Mittel 50 zum Erfassen des Eintretens mindestens einer der Bedingungen a) bis c) das Eintreten der entsprechenden Bedingung direkt an das Motorsteuergerät 30 melden. Bei diesem Ausführungsbeispiel wird das Sperrsignal dann von der Auswerteeinheit 35 zur Prüfeinheit 36 des Motorsteuergeräts 30 übermittelt statt von dem Femstartsteuergerät 20 bereitgestellt.

## Patentansprüche

1. Fernstartsystem für ein Fahrzeug mit
- einem Fernstartsteuergerät (20)
zum Empfangen eines Signals zum Aktivieren eines Fernstarts,
zum Überprüfen von mindestens einer Fernstartvoraussetzung, die die Verriegelung der Türen umfasst,
zum Verriegeln der Türen, wenn das Signal zum Aktivieren eines Fernstarts empfangen wurde und die Türen nicht verriegelt sind, und zum Bereitstellen eines Freigabesignals, wenn die Türen verriegelt sind;
- Mitteln (40) zum Erfassen eines Losfahrwunsches eines Fahrers; und
- einem Motorsteuergerät (30), das Folgendes umfasst:
i. eine erste Auswerteeinheit (32) zum Auswerten eines von dem Fernstartsteuergerät (20) empfangenen Signals;
ii. eine mit der ersten Auswerteeinheit (32) gekoppelte Einheit (33) zum Starten eines Motors im Ansprechen auf ein Freigabesignal und zum Anhalten des Motors im Ansprechen auf ein Sperrsignal; und
iii. eine zweite Auswerteeinheit (35) zum Auswerten von von den Mitteln (40) zum Erfassen eines Losfahrwunsches empfangenen Signalen;
wobei das Motorsteuergerät (30) ferner eine Speichereinheit (37) zum Speichern des letzten von der ersten Auswerteeinheit (32) ausgewerteten Signals und eine mit der zweiten Auswerteeinheit (35), mit der Speichereinheit (37) und mit der Einheit (33) zum Starten und Anhalten des Motors gekoppelte Prüfeinheit (36) umfasst, die dazu ausgebildet ist, bei Feststellen eines Losfahrwunsches durch die zweite Auswerteeinheit (35) das in der Speichereinheit (37) gespeicherte Signal auszulesen und, falls es sich um ein Freigabesignal handelt, ein Sperrsignal an die Einheit (33) zum Starten und Anhalten des Motors zu senden sowie den Inhalt der Speichereinheit (37) zu modifizieren.

2. Fernstartsystem nach Anspruch 1,
**dadurch gekennzeichnet, dass**
die Mittel (40) zum Erfassen eines Losfahrwunsches einen Pedalwertgeber eines elektronischen Gaspedals umfassen.

3. Fernstartsystem nach Anspruch 1,
**dadurch gekennzeichnet, dass**
die Mittel (40) zum Erfassen eines Losfahrwunsches einen Sensor zum Erfassen einer Motordrehzahl umfassen.

4. Fernstartsystem nach Anspruch 1 oder 2,
**dadurch gekennzeichnet, dass**
die Mittel (40) zum Erfassen eines Losfahrwunsches dazu ausgebildet sind, eine Drehmomentanforderung an den Motor festzustellen.

5. Fernstartsystem nach einem der vorhergehenden Ansprüche,
**dadurch gekennzeichnet, dass**
das System ferner Mittel (50) zum Erfassen des Eintretens mindestens einer der folgenden Bedingungen umfasst:
a) Entriegeln des Fahrzeugs;
b) Öffnen mindestens einer Fahrzeugtüre; und
c) Anwesenheit einer Person im Fahrzeug

6. Fernstartsystem nach Anspruch 5,
**dadurch gekennzeichnet, dass**
die Mittel (50) zum Erfassen des Eintretens mindestens einer der Bedingungen a), b) oder c) mindestens eines aus der folgenden Gruppe umfassen:
einen Kontaktschalter eines Türschließzylinders einer Türe des Fahrzeugs, eine Zentralverriegelung des Fahrzeugs, einen Türkontaktschalter einer Tür des Fahrzeugs, insbesondere der Fahrertüre, einen Türgriffsensor, eine Sitzbelegungserkennung und einen Innenraumsensor einer Diebstahlwamanlage.

7. Fernstartsystem nach Anspruch 5 oder 6,
**dadurch gekennzeichnet, dass**
die Prüfeinheit (36) des Motorsteuergeräts (30) mit den Mitteln (50) zum Erfassen des Eintretens mindestens einer der Bedingungen a), b) oder c) gekoppelt und dazu ausgebildet ist, bei Feststellen des Eintretens mindestens einer der Bedingungen a), b) oder c) ebenfalls das in der Speichereinheit (37) gespeicherte Signal auszulesen und, falls es sich um ein Freigabesignal handelt, ein Sperrsignal an die Einheit zum Starten und Anhalten des Motors zu senden sowie den Inhalt des Speichereinheit (37) zu modifizieren.

8. Fernstartsystem nach Anspruch 5 oder 6,
**dadurch gekennzeichnet, dass**
das Fernstartsteuergerät (20) mit den Mitteln zum Erfassen des Eintretens mindestens einer der Bedingungen a), b) oder c) gekoppelt und dazu ausgebildet ist, bei Feststellen des Eintretens mindestens einer der Bedingungen a), b) oder c) ein Sperrsignal bereitzustellen, wenn ein Fernstart vorliegt.

9. Fernstartsystem nach einem der vorhergehenden Ansprüche,
**dadurch gekennzeichnet, dass**
das Fernstartsteuergerät (20) dazu ausgebildet ist, einen Femstart im Ansprechen auf ein Signal von einer Fernbedienung und/oder zu einer voreingestellten Zeit zu aktivieren.

10. Fernstartsystem nach einem der vorhergehenden Ansprüche,
**dadurch gekennzeichnet, dass**
das Fernstartsteuergerät (20) und das Motorsteuergerät (30) über einen CAN-Bus (60) verbunden sind.

11. Verfahren zum Absichern einer Fernstartfunktion,
**gekennzeichnet durch** folgende Schritte:
- Empfangen eines Signals **durch** ein Femstartsteuergerät (20) zum Aktivieren eines Fernstarts;
- Überprüfen von mindestens einer Fernstartvoraussetzung **durch** das Fernstartsteuergerät (20), wobei eine der mindestens einen Fernstartvoraussetzungen die Verriegelung der Türen umfasst;
- Verriegeln der Türen **durch** ein Signal des Fernstartsteuergeräts (20), wenn das Signal zum Aktivieren des Fernstarts empfangen wurde und die Türen nicht verriegelt sind;
- Bereitstellen eines Freigabesignals **durch** das Fernstartsteuergerät (20) zum Aktivieren eines Fernstarts, wenn die Türen verriegelt sind;
- Empfangen des Freigabesignals von dem Fernstartsteuergerät (20) durch ein Motorsteuergerät (30);
- Starten eines Motors im Ansprechen auf das empfangene Freigabesignal **durch** das Motorsteuergerät (30);
- Erfassen eines Losfahrwunsches eines Fahrers und Bereitstellen eines Fahrerwunschsignals;
- Empfangen des Fahrerwunschsignals **durch** das Motorsteuergerät (30);
- Auswerten des Fahrerwunschsignals **durch** das Motorsteuergerät (30); und
- Abschalten des Motors **durch** das Motorsteuergerät (30), sobald nach einem Fernstart ein Losfahrwunsch eines Fahrers festgestellt wird.

12. Verfahren zum Absichern einer Fernstartfunktion nach Anspruch 11,
**dadurch gekennzeichnet, dass**
das Erfassen eines Losfahrwunsches eines Fahrers mittels eines Pedalwertgebers (40) erfolgt.

13. Verfahren zum Absichern einer Fernstartfunktion nach Anspruch 11,
**dadurch gekennzeichnet, dass**
das Erfassen eines Losfahrwunsches eines Fahrers mittels eines Sensors (40) zum Erfassen eines Motordrehzahl erfolgt.

14. Verfahren zum Absichern einer Fernstartfunktion nach Anspruch 11 oder 12,
**dadurch gekennzeichnet, dass**
das Erfassen eines Losfahrwunsches eines Fahrers die Feststellung einer Drehmomentanforderung an den Motor umfasst.

15. Verfahren zum Absichern einer Fernstartfunktion nach einem der Ansprüche 11 bis 14,
**gekennzeichnet durch** folgenden zusätzlichen Schritt:
- Abschalten des Motors **durch** das Motorsteuergerät (30) bei Eintreten mindestens einer der folgenden Bedingungen nach einem Fernstart:
a) Entriegeln des Fahrzeugs;
b) Öffnen mindestens einer Fahrzeugtüre; und
c) Anwesenheit einer Person im Fahrzeug.

## Claims

1. Remote ignition system for a vehicle comprising
- a remote ignition control device (20)
for receiving a signal for activating a remote ignition,
for checking at least one remote ignition prerequisite which comprises the locking of the doors,
for locking the doors when the signal for activating a remote ignition has been received and the doors are not locked, and
for providing a release signal when the doors are locked;
- means (40) for detecting a driver's intention to start driving; and
- an engine control device (30) which comprises the following:
i. a first evaluation unit (32) for evaluating a signal received from the remote ignition control device (20);
ii. a unit (33) coupled to the first evaluation unit (32) for starting an engine in response to a release signal and for stopping the engine in response to a blocking signal; and
iii. a second evaluation unit (35) for evaluating signals received from the means (40) for detecting an intention to start driving;
wherein the engine control device (30) further comprises a storage unit (37) for storing the last signal evaluated by the first evaluation unit (32), and a test unit (36) which is coupled to the second evaluation unit (35), to the storage unit (37) and to the unit (33) for starting and stopping the engine and which is designed to read out the signal stored in the storage unit (37) when the second evaluation unit (35) ascertains an intention to start driving and, if said signal is a release signal, to send a blocking signal to the unit (33) for starting and stopping the engine and to modify the contents of the storage unit (37).

2. Remote ignition system according to claim 1, **characterised in that** the means (40) for detecting an intention to start driving comprise a pedal value sensor of an electronic gas pedal.

3. Remote ignition system according to claim 1, **characterised in that** the means (40) for detecting an intention to start driving comprise a sensor for detecting an engine speed.

4. Remote ignition system according to either claim 1 or claim 2, **characterised in that** the means (40) for detecting an intention to start driving are designed to ascertain a torque demand on the engine.

5. Remote ignition system according to any one of the preceding claims, **characterised in that** the system further comprises means (50) for detecting the occurrence of at least one of the following conditions:
a) unlocking of the vehicle;
b) opening of at least one vehicle door; and
c) presence of an individual in the vehicle.

6. Remote ignition system according to claim 5, **characterised in that** the means (50) for detecting the occurrence of at least one of the conditions a), b) and c) comprise at least one means from the following group:
a contact switch of a door lock cylinder of a door of the vehicle; a central locking system of the vehicle; a door contact switch of a door of the vehicle, in particular of the driver's door; a door handle sensor; a seat occupancy recognition unit;
and an interior sensor of an anti-theft alarm system.

7. Remote ignition system according to either claim 5 or claim 6, **characterised in that** the test unit (36) of the engine control device (30) is coupled to the means (50) for detecting the occurrence of at least one of the conditions a), b) and c) and is designed to likewise read out the signal stored in the storage unit (37) when the occurrence of at least one of the conditions a), b) and c) is ascertained, and, if said signal is a release signal, to send a blocking signal to the unit for starting and stopping the engine and to modify the contents of the storage unit (37).

8. Remote ignition system according to either claim 5 or claim 6, **characterised in that** the remote ignition control device (20) is coupled to the means for detecting the occurrence of at least one of the conditions a), b) and c) and is designed to provide a blocking signal when the occurrence of at least one of the conditions a), b) and c) is ascertained, if there is a remote ignition.

9. Remote ignition system according to any one of the preceding claims, **characterised in that** the remote ignition control device (20) is designed to activate a remote ignition in response to a signal from a remote control and/or at a preset time.

10. Remote ignition system according to any one of the preceding claims, **characterised in that** the remote ignition control device (20) and the engine control device (30) are connected via a CAN bus (60).

11. Method for securing a remote ignition function, **characterised by** the following steps:
- reception of a signal by a remote ignition control device (20) for activating a remote ignition;
- checking of at least one remote ignition prerequisite by the remote ignition control device (20), one of the at least one remote ignition prerequisites comprising locking of the doors;
- locking of the doors by a signal of the remote ignition control device (20) when the signal for activating the remote ignition has been received and the doors are not locked;
- provision of a release signal by the remote ignition control device (20) for activating a remote ignition when the doors are locked;
- reception of the release signal from the remote ignition control device (20) by an engine control device (30);
- starting of an engine in response to the received release signal by the engine control device (30);
- detection of a driver's intention to start driving and provision of a driver's intention signal;
- reception of the driver's intention signal by the engine control device (30);
- evaluation of the driver's intention signal by the engine control device (30); and
- shutting off of the engine by the engine control device (30) as soon as a driver's intention to start driving is ascertained after a remote ignition.

12. Method for securing a remote ignition function according to claim 11, **characterised in that** a driver's intention to start driving is detected by means of a pedal value sensor (40).

13. Method for securing a remote ignition function according to claim 11, **characterised in that** a driver's intention to start driving is detected by means of a sensor (40) for detecting an engine speed.

14. Method for securing a remote ignition function according to either claim 11 or claim 12, **characterised in that** the detection of a driver's intention to start driving comprises ascertaining a torque demand on the engine.

15. Method for securing a remote ignition function according to any one of claims 11 to 14, **characterised by** the following additional step:
- shutting off of the engine by the engine control device (30) when at least one of the following conditions occurs after a remote ignition:
a) unlocking of the vehicle;
b) opening of at least one vehicle door; and
c) presence of an individual in the vehicle.

## Revendications

1. Système de démarrage à distance pour un véhicule, comprenant :
- un appareil de commande de démarrage à distance (20)
pour recevoir un signal permettant d'activer un démarrage à distance,
pour vérifier au moins une hypothèse de démarrage à distance, qui comprend le verrouillage des portes,
pour verrouiller les portes lorsque le signal d'activation d'un démarrage à distance a été reçu et que les portes ne sont pas verrouillées, et pour fournir un signal de validation lorsque les portes sont verrouillées ;
- des moyens (40) pour saisir un souhait de départ d'un chauffeur ; et
- un appareil de commande de moteur (30), qui comprend les éléments suivants :
i. une première unité d'exploitation (32) pour exploiter un signal reçu de l'appareil de commande de démarrage à distance (20) ;
ii. une unité (33) couplée à la première unité d'exploitation (32) pour faire démarrer un moteur en réponse à un signal de validation et pour arrêter le moteur en réponse à un signal de blocage ; et
iii. une seconde unité d'exploitation (35) pour exploiter des signaux reçus des moyens (40) pour saisir un souhait de départ ;
dans lequel l'appareil de commande de moteur (30) comprend en outre une unité de mémoire (37) pour mémoriser le dernier des signaux exploités par la première unité d'exploitation (32) et une unité de contrôle (36) couplée à la seconde unité d'exploitation (35), à l'unité de mémoire (37) et à l'unité (33) de démarrage et d'arrêt du moteur, laquelle unité de contrôle (36) est conçue pour, lors du blocage d'un souhait de départ, lire le signal mémorisé dans l'unité de mémoire (37) par la seconde unité d'exploitation (35) et, au cas où il s'agit d'un signal de validation, envoyer un signal de blocage à l'unité (33) de démarrage et d'arrêt du moteur et modifier le contenu de l'unité de mémoire (37).

2. Système de démarrage à distance selon la revendication 1,
**caractérisé en ce que**
les moyens (40) pour saisir un souhait de départ comprennent un capteur de position d'un accélérateur électronique.

3. Système de démarrage à distance selon la revendication 1,
**caractérisé en ce que**
les moyens (40) pour saisir un souhait de départ comprennent un capteur pour saisir le régime du moteur.

4. Système de démarrage à distance selon la revendication 1 ou la revendication 2,
**caractérisé en ce que**
les moyens (40) pour saisir un souhait de départ sont conçus pour bloquer une demande de couple sur le moteur.

5. Système de démarrage selon l'une quelconque des revendications précédentes,
**caractérisé en ce que**
le système comprend en outre des moyens (50) pour saisir la présence d'au moins l'une des conditions suivantes :
a) déverrouillage du véhicule ;
b) ouverture d'au moins une porte du véhicule ; et
c) présence d'une personne dans le véhicule.

6. Système de démarrage à distance selon la revendication 5,
**caractérisé en ce que**
les moyens (50) pour saisir la présence d'au moins une des conditions a), b) ou c) comprennent au moins l'un des éléments du groupe suivant :
un commutateur de contact d'un cylindre de fermeture d'une porte du véhicule, un verrouillage central du véhicule, un commutateur de contact d'une porte du véhicule, en particulier de la porte du chauffeur, un capteur de poignée de porte, une reconnaissance d'occupation de siège et un capteur d'espace interne d'une installation d'alarme antivol.

7. Système de démarrage à distance selon la revendication 5 ou la revendication 6,
**caractérisé en ce que**
l'unité de contrôle (36) de l'appareil de commande de moteur (30) est couplée aux moyens (50) pour saisir la présence d'au moins l'une des conditions a), b) ou c) et est conçue pour, lors de la présence d'au moins l'une des conditions a), b) ou c), lire également le signal mémorisé dans l'unité de mémoire (37) et, au cas où il s'agit d'un signal de validation, envoyer un signal de blocage à l'unité de démarrage et d'arrêt du moteur et modifier le contenu de l'unité de mémoire (37).

8. Système de démarrage à distance selon la revendication 5 ou la revendication 6,
**caractérisé en ce que**
l'appareil de commande de démarrage à distance (20) est couplé aux moyens de saisie de la présence d'au moins l'une des conditions (a), b) ou c) et est conçu pour, lors du blocage d'au moins l'une des conditions a), b) ou c), élaborer un signal de blocage s'il y a un démarrage à distance.

9. Système de démarrage à distance, selon l'une quelconque des revendications précédentes,
**caractérisé en ce que**
l'appareil de commande de démarrage à distance (20) est conçu pour activer un démarrage à distance en réponse à un signal d'un service à distance et/ou à un temps préréglé.

10. Système de démarrage à distance selon l'une quelconque des revendications précédentes,
**caractérisé en ce que**
l'appareil de commande de démarrage à distance (20) et l'appareil de commande de moteur (30) sont raccordés vis un bus CAN (60).

11. Procédé de sécurisation d'une fonction de démarrage à distance,
**caractérisé par** les étapes suivantes consistant à :
- recevoir un signal par un appareil de commande de démarrage à distance (20) pour activer un démarrage à distance ;
- contrôler au moins une hypothèse de démarrage à distance par l'appareil de commande de démarrage à distance (20), l'une des au moins une hypothèse de démarrage à distance comprenant le verrouillage des portes ;
- verrouiller les portes par un signal de l'appareil de commande de démarrage à distance (20) si le signal d'activation du démarrage à distance a été reçu et que les portes ne sont pas verrouillées ;
- élaborer un signal de validation par l'appareil de commande de démarrage à distance (20) pour activer un démarrage à distance lorsque les portes sont verrouillées ;
- recevoir le signal de validation de l'appareil de commande de démarrage à distance (20) par un appareil de commande de moteur (30) ;
- démarrer un moteur en réponse au signal de validation reçu par l'appareil de commande de moteur (30) ;
- détecter un souhait de départ d'un chauffeur et élaborer un signal de souhait du chauffeur ;
- recevoir le signal de souhait du chauffeur par l'appareil de commande de moteur (30) ;
- exploiter le signal de souhait du chauffeur par l'appareil de commande de moteur (30) ; et
- déconnecter le moteur par l'appareil de commande de moteur (30) aussitôt qu'après un démarrage à distance un souhait de départ d'un chauffeur a été bloqué.

12. Procédé de sécurisation d'une fonction de démarrage à distance selon la revendication 11,
**caractérisé en ce que**
la saisie d'un souhait de départ d'un chauffeur se fait à l'aide d'un capteur de position d'accélérateur (40).

13. Procédé de sécurisation d'une fonction de démarrage à distance selon la revendication 11,
**caractérisé en ce que**
la saisie d'un souhait d'un chauffeur se fait au moyen d'un capteur (40) pour saisir le régime du moteur.

14. Procédé de sécurisation d'une fonction de démarrage à distance selon la revendication 11 ou la revendication 12,
**caractérisé en ce que**
la saisie d'un souhait d'un chauffeur comprend le blocage d'une demande de couple sur le moteur.

15. Procédé de sécurisation d'une fonction de démarrage à distance selon l'une quelconque des revendications 11 à 14,
**caractérisé par** l'étape supplémentaire suivante :
- déconnexion du moteur par l'appareil de commande de moteur (30) en présence d'au moins l'une des conditions suivantes après un démarrage à distance :
a) déverrouillage du véhicule ;
b) ouverture d'au moins une porte du véhicule ; et
c) présence d'une personne dans le véhicule.
